(19) Europäisches Patentamt / European Patent Office / Office européen des brevets

(11) **EP 2 794 940 B1**

(12) # EUROPEAN PATENT SPECIFICATION

(45) Date of publication and mention
of the grant of the patent:
**12.09.2018 Bulletin 2018/37**

(51) Int Cl.:
***C22B 3/04*** *(2006.01)*    ***C22B 3/20*** *(2006.01)*
***C22B 3/02*** *(2006.01)*    ***C22B 15/00*** *(2006.01)*

(21) Application number: **12859048.6**

(22) Date of filing: **18.12.2012**

(86) International application number:
**PCT/FI2012/051260**

(87) International publication number:
**WO 2013/093194 (27.06.2013 Gazette 2013/26)**

(54) **METHOD AND ARRANGEMENT FOR ENHANCING USE OF REACTOR VOLUME IN CONNECTION WITH HYDROMETALLURGICAL LEACHING**

VERFAHREN UND ANORDNUNG ZUR ERWEITERTEN VERWENDUNG EINES REAKTORVOLUMENS IN VERBINDUNG MIT HYDROMETALLURGISCHER LAUGUNG

PROCÉDÉ ET DISPOSITIF POUR AMÉLIORER L'UTILISATION D'UN VOLUME DE RÉACTEUR EN LIAISON AVEC UNE LIXIVIATION HYDROMÉTALLURGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2011 FI 20116309**

(43) Date of publication of application:
**29.10.2014 Bulletin 2014/44**

(73) Proprietor: **Outotec (Finland) Oy**
**02230 Espoo (FI)**

(72) Inventors:
• **HAAKANA, Timo**
**FI-02170 Espoo (FI)**
• **SAXÉN, Björn**
**FI-28360 Pori (FI)**

• **TIIHONEN, Jari**
**FI-28330 Pori (FI)**

(74) Representative: **Kolster Oy Ab**
**(Salmisaarenaukio 1)**
**P.O. Box 204**
**00181 Helsinki (FI)**

(56) References cited:
**WO-A1-2006/087412    WO-A1-2007/042604**
**US-A- 4 093 526        US-A- 4 157 912**
**US-A- 4 452 762        US-A1- 2010 098 608**
**US-A1- 2010 098 608    US-B2- 6 929 677**
**US-B2- 6 929 677        US-B2- 7 485 269**
**US-B2- 7 485 269**

**EP 2 794 940 B1**

**Description**

FIELD OF THE INVENTION

The invention relates to a method and arrangement for enhancing use of reactor volume used in a leaching stage in a hydrometallurgical process.

BACKGROUND OF THE INVENTION

When a concentrate or a calcine containing valuable metals is processed in a hydrometallurgical process, the process typically contains a leaching stage, solution purification and electrolytic recovery. The leaching solution used in the leaching stage is usually return acid from electrowinning and contains acid and an amount of valuable metals recovered in the electrowinning. Also oxygen-bearing gas is fed into mixing reactors in the leaching stage. This type of leaching is particularly suitable for nickel and zinc concentrates as well as for gold-bearing pyrite. The leaching reaction takes place on a particle surface, the reaction depending on the surface. Accordingly, a higher amount of particles (per solution volume) will lead to faster leaching. However, particle concentration is often restricted, because a specific amount of leaching solution is needed for a particular production capacity. A large leaching flow requires high reactor volumes for a sufficient retention time to be obtained for particles to dissolve. Reactors represent a significant investment in the leaching process and the space they require may cause difficulties in the lay-out design of the process.

US patent publication 6,929,677 describes a counter-current leaching of copper concentrate in plural stages in a chloride milieu with the aim of leaching the copper contained in the concentrate so that iron and sulphur precipitate. To allow iron to be precipitated in the form of hematite, a separation of liquid and solid matter is carried out between the stages, and some of the solid matter is returned to a previous stage or to a reactor in the same stage but in a counter current direction in relation to the main flow of the solid matter.

US 4 157 912 discloses a process for treating thermally activated metal sulphides containing copper, iron and zinc for separate recovery of zinc as zinc sulphide.

OBJECT OF THE INVENTION

An object of the invention is to provide a hydrometallurgical leaching process in which reactor volume is in efficient use.

SUMMARY OF THE INVENTION

There is provided the subject matter of the independent claims. Embodiments are defined in the dependent claims.

The invention relates to a method for enhancing use of reactor volume in a leaching stage in a hydrometallurgical process, wherein a stage of leaching solid matter containing valuable metals takes place by means of a leaching solution in a reactor series of one or more reactors. The solid matter containing valuable metals is zinc sulphide and/or zinc calcine and a slurry containing solution and solid matter is removed from the one or more reactors through overflow and conveyed to a flotation unit for the liquid and solid matter separation. The separated solid matter or part of the solid matter is returned to the reactor from where the slurry was removed and/or is transferred to a reactor, which is next in the flow direction of the solid matter and to which fresh, unreacted solution is fed.

The invention relates also to an arrangement for enhancing reactor volume use in a leaching unit in a hydrometallurgical process, wherein the arrangement comprises a leaching unit, which comprises

a series of one or more reactors,

a flotation unit as liquid and solid matter separation unit adapted for separating the liquid and solid matter from the slurry, which separation unit is arranged in association with the one or more reactors,

equipment for returning the separated solid matter or part of the solid matter to the reactor from where the slurry was removed, and/or

equipment for transferring the separated solid matter or part of the solid matter to a reactor, which is next in the flow direction of the solid matter and to which fresh, unreacted solution is fed.

LIST OF FIGURES

Figure 1 is a diagram according to Example 1 of a prior art reactor series;

Figure 2 is a diagram according to Example 2 of a reactor series of the invention;
Figure 3 is a diagram according to Example 3 of a second reactor series of the invention;
Figure 4 is a diagram according to Example 4 of yet another reactor series of the invention;
Figure 5 is a graph showing zinc yield as a function of solid matter retention; and
Figure 6 is a graph showing zinc yield as a function of retention volume.

DETAILED DESCRIPTION OF THE INVENTION

The invention relates to a method for enhancing use of reactor volume in connection with hydrometallurgical leaching of raw material containing valuable metals. According to the invention, a concentrate or calcine leaching stage is carried out primarily using a plurality of reactors arranged in series, one or more reactors being provided with liquid-solid matter separation and the separated solid matter being transferred to a reactor in the leaching stage. Usually the leaching takes place in one or more stages, each stage consisting of a reactor series of at least one, although usually more than one, reactor. The exact number of reactors in a reactor series depends on various matters, such as on the amount of feed material and on the size of the reactors. Typically the reactor series comprises 1 to 10 reactors. Most often a leaching solution containing acid is used, the solution being recycled from another process stage. The solution may be recycled from electrolytic recovery of valuable

metals, for example, in which case the solution contains an amount of the same metal that is to be leached in the leaching stage dissolved therein. The metal to be leached and the process determine the preferred concentration of valuable metals in the product solution to be produced in the leaching. Naturally also additional agents may be fed into the leaching stage, one agent that enhances leaching being oxygen-bearing gas, which may be air, air enriched with oxygen, or oxygen. The reactors are mixing reactors, i.e. they are provided with an efficient agitator that maintains the solids in the slurry. Although a zinc process is used as an example in the specification, it should be noted that the devised method is also applicable to leaching processes of other hydrometallurgical raw materials containing valuable metals. Examples of other raw materials containing valuable metals include nickel sulphide, copper sulphide and gold-bearing pyrite.

Since the leaching in the reactor series takes place according to a co-current flow principle, the feed direction of both the raw material to be leached and the leaching solution is the same and hence they flow to the same direction in the reactor series. Either all of the raw material and the leaching solution are fed into the first reactor or, in some cases, leaching solution may also be fed into a plural number of reactors.

The solids concentration in the slurry formed of leaching solution and solid matter may be increased by separating partly leached solid matter from solution concentrated with valuable metals, by returning the solid matter to the reactor where it was taken from and by continuing the leaching of the solid matter in the same reactor. According to a second alternative, the solid matter separated from the slurry is fed into a fresh solution that contains a smaller amount of valuable metals. In that alternative leaching solution is fed into a plural number of reactors. The separation of solids and liquid that takes place inside the reactor series may be carried out e.g. by flotation, cyclone separation or thickening. Flotation may take place either inside or outside a reactor. When the flotation unit is inside a reactor, it does not necessarily need a separate gas feed but the oxygen-bearing gas fed into the reactor also serves as dispersing air for the flotation. When the flotation unit is outside a reactor, the dispersing air is delivered separately into the flotation unit. In the best case flotation allows an insoluble fraction of valuable metals to be selectively separated from a fraction with no valuable metals as they have already dissolved, which further enhances the process. From the point of view of the invention this is not, however, indispensable.

It is obvious that the slurry removed from the last reactor in the leaching stage is delivered to liquid and solid matter separation, from where a product solution containing valuable metals is delivered to solution purification, whereas the solid matter, after the usual treatment, becomes process reject. The liquid and solid matter separation that takes place after the leaching stage is typically thickening.

During the development of the method of the invention it was discovered that enhancing the leaching of the raw material in the leaching stage reactors by liquid and solid matter separation arranged within the stage and by circulating solid matter formed in the separation allows the size of the reactors in the reactor series to be significantly reduced. The volume of the reactors may be reduced down to as little as a quarter of the volume needed for supplying the same amount of solution and solid matter to a reactor when circulating is not used. Since reactors account for an important part of the leaching stage investments, enhanced processing allows costs to be cut substantially.

When the raw material containing valuable metals is a zinc concentrate, for example, its zinc content is in the order of 50% by weight. The leaching solution used in a zinc process is return acid from electrowinning, in which the amount of zinc is about 50 g/l. A saturated zinc sulphate solution contains about 150 g/l of zinc, which means that leaching increases the zinc concentration of the solution by about 100 g/l. The conclusion to be drawn from this is that when the leaching solution and solid matter proceed from one reactor to the next at the same rate, the solids content in the reactor that is first in the direction of flow may be in the order of 200 g/l at the most.

The objective of the method of the present invention is to enhance leaching by increasing the solid matter concentration of slurry in one or more reactors, allowing at the same time the size of the reactors used in the leaching to be substantially reduced. In a zinc process flotation provides a very rapid and selective method for separating solid matter and allowing an inert zinc concentrate to be separated from a solution.

The leaching rate of a relatively slowly dissolvable raw material containing valuable metals may be illustrated by the following formula, for example, which in the following examples is applied to a sulphidic zinc concentrate:

$$r_{ZnS} = k * c_{ZnS} * c^{0.5}_{Fe3+} \tag{1}$$

where r = reaction rate
k = coefficient for reaction
c = concentration of reacting component

The above formula enables to present a reaction degree typical for leaching and proceeding as a function of time, the leaching slowing down as the amount of insoluble fraction containing valuable metals becomes smaller.

The invention relates also to an arrangement for enhancing reactor volume use in a leaching unit in a hydrometallurgical process, wherein the arrangement comprises a leaching unit, which comprises
a series of one or more reactors,
a liquid and solid matter separation unit adapted for separating the liquid and solid matter from the slurry, which separation unit is arranged in association with the one or more reactors,
equipment for returning the separated solid matter or part of the solid matter to the reactor from where the slurry was removed, and/or equipment for transferring the separated solid matter or part of the solid matter to a reactor, which is next in the flow direction of the solid matter and to which fresh, unreacted solution is fed.

According to an embodiment of the invention the arrangement comprises a flotation unit inside a reactor.

According to an embodiment of the invention the arrangement comprises a flotation unit outside a reactor.

According to an embodiment of the invention in the arrangement the liquid and solid matter separation unit is a cyclone.

According to an embodiment of the invention the liquid and solid matter separation unit is arranged in connection with each reactor in the reactor series.

According to an embodiment of the invention the liquid and solid matter separation unit is arranged in connection with two last reactors in the reactor series.

According to an embodiment of the invention the liquid and solid matter separation unit is arranged in connection with the last reactor in the reactor series.

EXAMPLES

The following examples illustrate enhanced reactor volume use in a zinc process, the reactor series being selected to consist of four reactors. The first example illustrates the leaching of zinc concentrate in a prior art series without circulating. The size of this reactor series has been given a value 100, and in examples 2 to 4 illustrating the invention reactor size is compared to this reactor size of a prior art process. Internal volume flow, in turn, in the other examples and the other reactors is compared to the volume flow of reactor 1 in Example 1. The zinc content of the leaching solution to be fed into reactor 1 is 50 g/l, the proportions of solution and solid matter exiting each reactor being shown in the tables. The amounts and concentrations of both the solution and the concentrate feed are the same in all the examples.

EXAMPLE 1

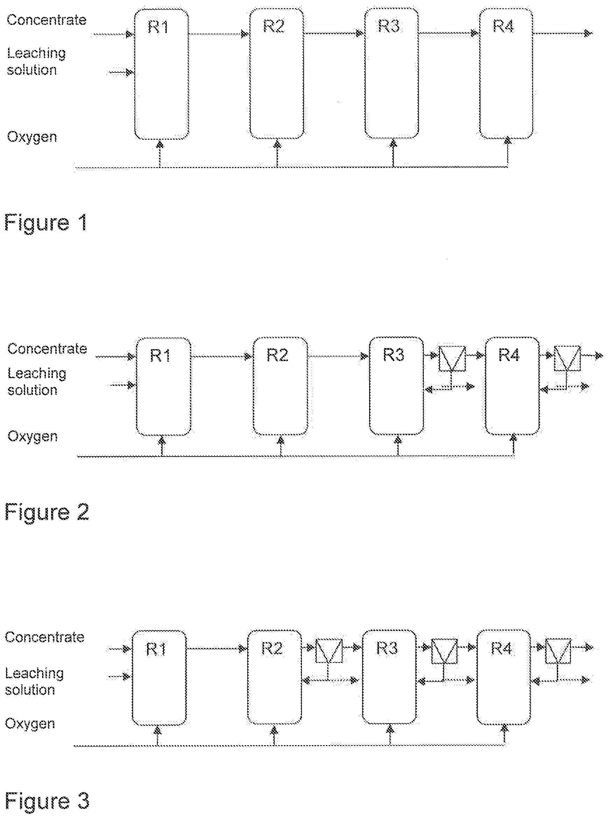

Example 1 and Figure 1 illustrate a prior art reactor series, in which the entire concentrate amount and the leaching solution from the electrowinning are fed into a first reactor in the series. Oxygen-bearing gas is fed into all the reactors in the series. The reactors are connected in series, and a zinc leaching yield of 98.6% by weight is obtained. The volume flow is determined on the basis of a zinc concentration of 150 g/l in the product solution leaving the last reactor. As the table shows, most of the solid matter dissolves already in the first reactor, but the other reactors are also needed to ensure sufficient yield.

**Table 1**

|  |  | R1 | R2 | R3 | R4 | Total |
|---|---|---|---|---|---|---|
| Reactor size | % | 100 | 100 | 100 | 100 | 100 |
| Flotation concentrate circulation | % | 0 | 0 | 0 | 0 | |
| Volume flow (internal) | % | 100 | 94 | 92 | 91 | |
| Volume flow (out) | % | 100 | 94 | 92 | 91 | |
| Retention time (outflow) | h | 6.4 | 6.8 | 7.0 | 7.1 | 27.3 |
| Solids (internal) | g/l | 127.7 | 107.1 | 98.5 | 95.0 | |
| Solids (out) | g/l | 127.7 | 107.1 | 98.5 | 95.0 | |
| $Fe^{2+}$ | g/l | 8.5 | 12.8 | 14.6 | 12.4 | |
| $Fe^{3+}$ | g/l | 2.0 | 2.0 | 2.0 | 5.0 | |
| $H_2SO_4$ | g/l | 84 | 45 | 29 | 20 | |
| Zn | g/l | 101 | 131 | 144 | 150 | |
| Zn yield | % | 61.6 | 85.6 | 94.7 | 98.6 | |
| $O_2$ feed | % | 61.7 | 24.1 | 9.2 | 5.1 | 100 |

EXAMPLE 2

Example 2 and the corresponding Figure 2 represent a case in which R3 and R4 are provided with a flotation unit where the slurry coming from the reactors is led to. The dispersing air used in the flotation is pressurized air (not shown in detail in the figure). Although in the diagram the flotation unit is outside the reactor, it may be placed also inside the reactor. The flotation units and the circulation accomplished with them allow leaching in the different reactors to be evened out, which means that a significant part of the leaching reaction takes place also in other reactors than the first one. Oxygen feed to the different reactors was adjusted to correspond to the leaching taking place in each reactor. A solids fraction, i.e. a sulphur concentrate, formed into froth in the flotation unit and containing mostly insoluble sulphide and element sulphur formed in the leaching reaction, is circulated back to the same reactor from where the slurry was fed into flotation. A solid matter fraction that does not form into froth continues in the solution rich in zinc to the next reactor and, after the last reactor, to the next process stage. A realistic flotation time is in the order of 6 to 9 min.

In the third and fourth reactors the solid matter concentration of the slurry was restricted by adjusting the amount of the solid matter to be circulated to a value of 400 g/l, which is suitable for a solid matter concentration in a mixing reactor. Hence some of the sulphur concentrate in the flotation units provided in association with reactors R3 and R4 is fed with the solution into the next reactor or, when the reactor is the last one, out of the leaching stage to prevent uncontrolled increase of solid matter concentration in the reactor. On the other hand, the circulation ratio is defined so as to ensure that yield losses do not occur. The results in Table 2 show that it is now possible to recover the same amount of zinc with a reactor series of reactors whose size is only 34% of those in Example 1. The volume of a flotation unit is 6 to 12% of reactor volume.

**Table 2**

|  |  | R1 | R2 | R3 | R4 | Total |
|---|---|---|---|---|---|---|
| Reactor size | % | 34 | 34 | 34 | 34 | 34 |
| Flotation concentrate circulation | % | 0 | 0 | 89.95 | 91.85 | |
| Volume flow (internal) | % | 105 | 99 | 130 | 130 | |
| Volume flow (out) | % | 105 | 99 | 93 | 91 | |
| Retention time (outflow) | h | 2.1 | 2.2 | 2.4 | 2.4 | 9.2 |
| Solids (internal) | g/l | 150 | 132 | 400 | 400 | |
| Solids (out) | g/l | 150 | 132 | 104 | 96 | |
| $Fe^{2+}$ | g/l | 4.3 | 8.1 | 11.9 | 11.3 | |

(continued)

|  | | R1 | R2 | R3 | R4 | Total |
|---|---|---|---|---|---|---|
| $Fe^{3+}$ | g/l | 2.0 | 2.0 | 2.0 | 5.0 | |
| $H_2SO_4$ | g/l | 122.1 | 87.8 | 38.6 | 20.0 | |
| Zn | g/l | 72 | 99 | 138 | 150 | |
| Zn yield | % | 34.8 | 57.9 | 90.1 | 98.6 | |
| $O_2$ feed | % | 35.2 | 24.3 | 30.2 | 10.3 | 100 |

EXAMPLE 3

In principle the solution according to Example 3 and Figure 3 works the same way as is disclosed in Example 2, except here reactors R2, R3 and R4 are provided with a flotation unit. Table 3 shows that the same leaching process may be carried out in yet smaller reactors. With solid matter circulation slurry density is adjusted to be in the order of 400 g/l in the last three reactors. The flotation time is the same as in Example 2, the volume of the flotation unit is 8 to 15% of the reactor volume. The table shows that a yield corresponding to that in Example 1 is now achieved by using reactors whose volume is only 24% of the reactor volumes in Example 1.

**Table 3**

|  | | R1 | R2 | R3 | R4 | Total |
|---|---|---|---|---|---|---|
| Reactor size | % | 24 | 24 | 24 | 24 | 24 |
| Flotation concentrate circulation | % | 0 | 86.62 | 90.56 | 91.87 | |
| Volume flow (internal) | % | 108 | 131 | 131 | 130 | |
| Volume flow (out) | % | 108 | 97 | 93 | 91 | |
| Retention time (outflow) | h | 1.5 | 1.6 | 1.7 | 1.7 | 6.5 |
| Solids (internal) | g/l | 154 | 400 | 400 | 400 | |
| Solids (out) | g/l | 154 | 118 | 102 | 96 | |
| $Fe^{2+}$ | g/l | 3.1 | 8.0 | 11.3 | 10.8 | |
| $Fe^{3+}$ | g/l | 2.0 | 2.0 | 2.0 | 5.0 | |
| $H_2SO_4$ | g/l | 130.1 | 64.3 | 35.0 | 20.0 | |
| Zn | g/l | 64 | 117 | 141 | 150 | |
| Zn yield | % | 27.0 | 74.5 | 92.6 | 98.6 | |
| $O_2$ feed | % | 27.5 | 46.4 | 17.8 | 8.3 | 100 |

EXAMPLE 4

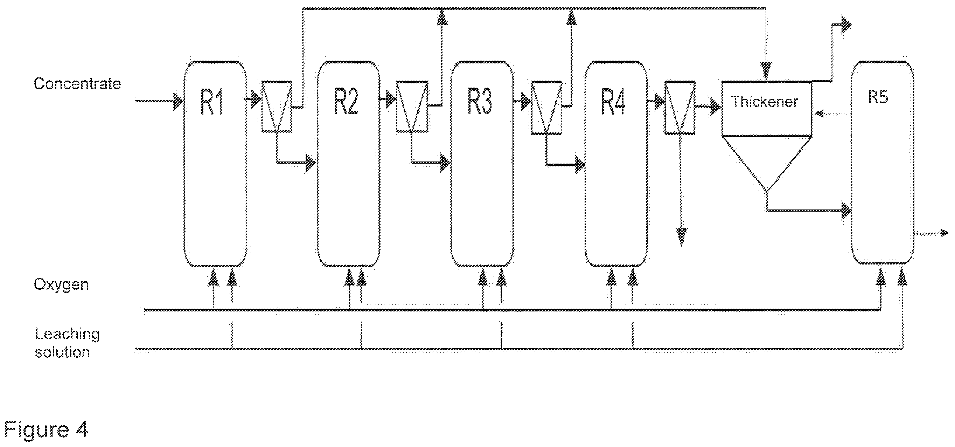

Example 4 and Figure 4 illustrate another way of enhancing reactor volume use. The concentrate in its entirety is fed into the first reactor, but leaching solution is fed into all of them. Each reactor is followed by a flotation unit, solution obtained from which is not conveyed to the next reactor but to a liquid and solid matter separation unit, such as a thickener, located after the leaching stage. The sulphur concentrate from the flotation unit is always conveyed to a reactor next in the direction of flow and not returned to the same reactor where it was taken from, as in the examples above. The size of the flotation unit is in the order of 0.4 to 8% of the reactor volume. Compared with a prior art solution, the solution according to this example provides each reactor with a higher solids concentration. Leaching is continued in each reactor until the zinc concentration of the solution achieves or comes close to the zinc concentration of a saturated zinc sulphate solution. After the leaching stage in the reactor series of four reactors, a liquid and solid matter separation takes place in the thickener, and the zinc sulphate solution obtained therefrom is taken to solution purification. The underflow from the thickener is taken to yet a further reactor R5, in which the leaching of solid matter with the leaching solution continues until rest of the zinc is dissolved. The solution thus obtained combined with the solution going to the solution purification and the deposit obtained is discharged as reject after the necessary processing.

**Table 4**

| | | R1 | R2 | R3 | R4 | R5 | Total |
|---|---|---|---|---|---|---|---|
| Reactor size | % | 25 | 25 | 25 | 25 | 25 | 32 |
| Volume flow (internal) | % | 46 | 37 | 24 | 12 | 12 | |
| Retention time (outflow) | h | 3.5 | 4.4 | 6.7 | 13.3 | 13.5 | 41.5 |
| Solids (internal) | g/l | 392 | 293 | 302 | 425 | 359 | |
| Solids (out) | g/l | 325 | 229 | 245 | 411 | 328 | |
| $Fe^{2+}$ | g/l | 15.0 | 11.6 | 6.6 | 1.8 | 36.7 | |
| $Fe^{3+}$ | g/l | 1.5 | 2.0 | 4.0 | 7.0 | 7.0 | |
| $H_2SO_4$ | g/l | 20.0 | 20.0 | 20.1 | 19.7 | 19.9 | |
| Zn | g/l | 143 | 149 | 153 | 155 | 124 | |
| Zn yield | % | 43.3 | 72.0 | 89.8 | 96.2 | 98.6 | |
| $O_2$ feed | % | 43.7 | 27.7 | 16.5 | 5.9 | 6.2 | 100 |

EXAMPLE 5

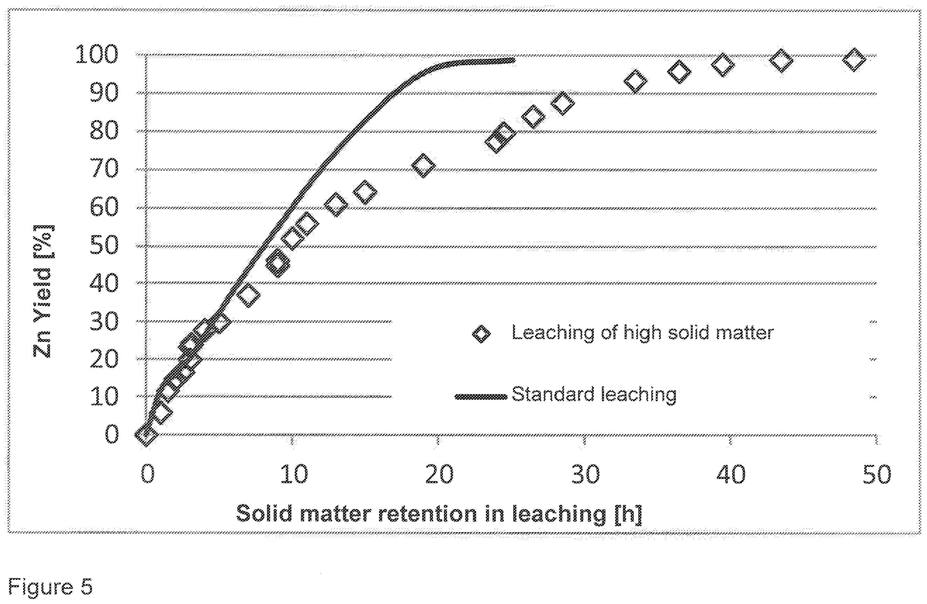

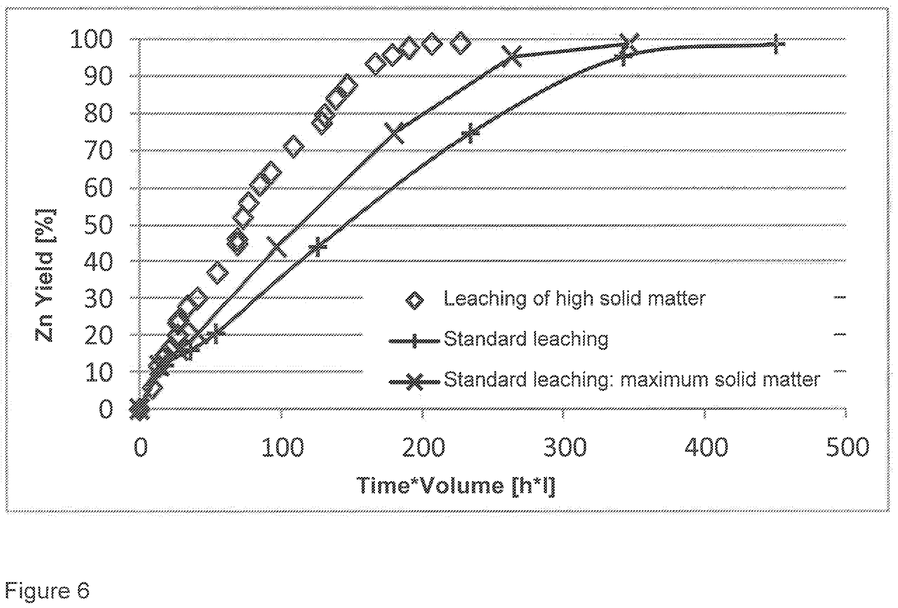

Two experiments on direct leaching and flotation of a sulphidic zinc concentrate were carried out. The first experiment comprised a standard batch leaching performed in one reactor and representing a leaching according to Example 1 without liquid and solid matter separation between the reactors. In the second experiment the same concentrate was leached in four reactors (R1 to R4) as described in Example 4. The experiment was carried out as a batch process with leaching solution being conveyed to each reactor and a liquid and solid matter separation taking place after each reactor, the solid matter thus obtained from the separation being then transferred to a next reactor, the solution rich in zinc being conveyed directly to thickening following the leaching stage and not to the next reactor. The temperature in the leaching stage was 95°C, and oxygen was fed into each reactor.
The results of the experiments are illustrated in Figures 5 and 6 and in Table 5. Figure 5 shows zinc yield during direct leaching as a function of solid matter retention time. Figure 6 shows zinc yield in direct leaching as a function of retention volume (retention volume = time * volume). Retention volume is proportional to the volume needed when leaching is scaled to a production scale process. Figure 6 also includes a graph showing the retention volume required when it is assumed a standard leaching experiment involving one reactor was carried out using the highest possible solid matter concentration.
Figure 5 shows that leaching carried out in a plural number of reactors was not even close to optimal but enabled nevertheless, as shown in Figure 6, a reduction of 30% in the retention volume to be obtained in comparison with a standard leaching carried out in one reactor. In flotations carried out in leaching involving a series of four reactors, the flotation of an inert zinc concentrate place in only a few minutes. The solid matter was conveyed to the next reactor and the solution was led from the leaching circuit to a thickener following the leaching stage. Figure 5 further shows that to obtain the same zinc yield the retention time required by the solid matter is longer when the process involves a plural number of reactors than with a single reactor. However, the total volume needed in leaching that involves a plural number of reactors was smaller than in the leaching experiment made with one reactor.

**Table 5**

| | Standard leaching | | Leaching of high solid matter | | | |
|---|---|---|---|---|---|---|
| | Exp. 1 | Max. amount of solids, Exp. 1 | Exp. 2 R1 | Exp. 2 R2 | Exp. 2 R3 | Exp. 2 R4 |
| Zn g/l in initial concentration | 47 | 47 | 40 | 60 | 65 | 50 |
| Zn g/l in final concentration | 124 | 150 | 80 | 106 | 140 | 90 |
| Solids g/l in initial concentration | 150 | 200 | 330 | 310 | 480 | 250 |

(continued)

|  | Standard leaching | | Leaching of high solid matter | | | |
|---|---|---|---|---|---|---|
|  | Exp. 1 | Max. amount of solids, Exp. 1 | Exp. 2 R1 | Exp. 2 R2 | Exp. 2 R3 | Exp. 2 R4 |
| Yield % | 99 | 99 | 20 | 45 | 77 | 99 |

**Claims**

1.   A method for enhancing reactor volume use in a leaching stage in a hydrometallurgical process, wherein a leaching stage of solid matter containing valuable metals takes place by means of leaching sulphate solution in a series of one or more reactors, wherein the solid matter containing valuable metals is zinc sulphide and/or zinc calcine and a slurry containing solution and solid matter is removed from the one or more reactors through overflow and conveyed to a flotation unit for the liquid and solid matter separation , the separated solid matter or part of the solid matter is returned to the reactor from where the slurry was removed and/or is transferred to a reactor, which is next in the flow direction of the solid matter and to which fresh, unreacted solution is fed.

2.   The method as claimed in claim 1, wherein the slurry containing solution and solids is removed from the one or more reactors through overflow, liquid and solid matter are separated from the slurry and solid matter is returned to the reactor from where the slurry was removed.

3.   The method as claimed in claim 1 or 2, wherein the flotation unit is inside the reactor.

4.   The method as claimed in claim 1 or 2, wherein the flotation unit is outside the reactor.

5.   The method as claimed in any one of the preceding claims, wherein the liquid and solid matter separation is arranged in connection with each reactor in the reactor series.

6.   The method as claimed in any one of the preceding claims, wherein the liquid and solid matter separation is arranged in connection with two last reactors in the reactor series.

7.   The method as claimed in any one of the preceding claims, wherein the liquid and solid matter separation is arranged in connection with the last reactor in the reactor series.

8.   The method as claimed in any one of the preceding claims, wherein the leaching stage takes place according to a co-current flow principle.

9.   The method as claimed in any one of the preceding claims , wherein the slurry containing solution and solid matter is removed from the one or more reactors through overflow, liquid and solid matter are separated from the slurry and solid matter is transferred to a reactor that is next in the flow direction of the solid matter.

10.  The method as claimed in any one of the preceding claims, wherein a selective separation of unreacted solid matter from slurry formed of solid matter and solution is arranged in association with the one or more reactors and the separated unreacted solid matter or part of the solid matter being returned to the reactor from where the slurry was removed or being transferred to a reactor, which is next in the flow direction of the solid matter and to which fresh, unreacted solution is fed.

11.  The method as claimed in any one of the preceding claims, wherein the slurry containing solution and solid matter is removed from the one or more reactors through overflow.

12.  An arrangement for enhancing reactor volume use in a leaching unit in a hydrometallurgical process with sulphate environment, wherein the arrangement comprises a leaching unit, which comprises
a series of one or more reactors,
a flotation unit as a liquid and solid matter separation unit adapted for separating the liquid and solid matter from the slurry, which separation unit is arranged in association with the one or more reactors,
equipment for returning the separated solid matter or part of the solid matter to the reactor from where the slurry was removed, and/or equipment for transferring the separated solid matter or part of the solid matter to a reactor, which is next in the flow direction of the solid matter and to which fresh, unreacted solution is fed.

13. The arrangement as claimed in claim 12, wherein the arrangement comprises a flotation unit inside a reactor.

14. The arrangement as claimed in claim 12, wherein the arrangement comprises a flotation unit outside a reactor.

15. The arrangement as claimed in any one of claims 12 to 14, wherein the liquid and solid matter separation unit is arranged in connection with each reactor in the reactor series.

16. The arrangement as claimed in any one of claims 12 to 14, wherein the liquid and solid matter separation unit is arranged in connection with two last reactors in the reactor series.

17. The arrangement as claimed in any one of claims 12 to 14, wherein the liquid and solid matter separation unit is arranged in connection with the last reactor in the reactor series.


**Patentansprüche**

1. Verfahren zum Verbessern der Verwendung eines Reaktorvolumens in einer Auslaugstufe in einem hydrometallurgischen Prozess, wobei eine Auslaugstufe von Feststoffen, die wertvolle Metalle enthalten, durch Auslagen einer Sulfatlösung in einer Reihe von einem oder mehreren Reaktoren stattfindet, wobei die Feststoffe, die wertvolle Metalle enthalten, Zinksulfid und/oder kalziniertes Zink sind, und ein Schlamm, der eine Lösung und Feststoffe enthält, aus dem einen oder den mehreren Reaktoren durch Überlauf entfernt wird und zu einer Flotationseinheit zur Trennung von Flüssigkeiten und Feststoffen befördert wird, die getrennten Feststoffe oder ein Teil der Feststoffe in den Reaktor zurückgebracht werden, aus dem der Schlamm entfernt wurde, und/oder zu dem Reaktor überführt werden, welcher der nächste in der Strömungsrichtung der Feststoffe ist und in den eine frische, nicht umgesetzte Lösung eingespeist wird.

2. Verfahren nach Anspruch 1, wobei der Schlamm, der eine Lösung und Feststoffe enthält, aus dem einen oder den mehreren Reaktoren durch Überlauf entfernt wird, Flüssigkeiten und Feststoffe aus dem Schlamm getrennt werden und Feststoffe in den Reaktor zurückgebracht werden, aus dem der Schlamm entfernt wurde.

3. Verfahren nach Anspruch 1 oder 2, wobei sich die Flotationseinheit innerhalb des Reaktors befindet.

4. Verfahren nach Anspruch 1 oder 2, wobei sich die Flotationseinheit außerhalb des Reaktors befindet.

5. Verfahren nach einem der vorstehenden Ansprüche, wobei die Trennung von Flüssigkeiten und Feststoffen in Verbindung mit jedem Reaktor in der Reaktorreihe angeordnet ist.

6. Verfahren nach einem der vorstehenden Ansprüche, wobei die Trennung von Flüssigkeiten und Feststoffen in Verbindung mit den beiden letzten Reaktoren in der Reaktorreihe angeordnet ist.

7. Verfahren nach einem der vorstehenden Ansprüche, wobei die Trennung von Flüssigkeiten und Feststoffen in Verbindung mit dem letzten Reaktor in der Reaktorreihe angeordnet ist.

8. Verfahren nach einem der vorstehenden Ansprüche, wobei die Auslaugstufe gemäß einem Gleichstrom-Strömungsprinzip stattfindet.

9. Verfahren nach einem der vorstehenden Ansprüche, wobei der Schlamm, der die Lösung und die Feststoffe enthält, von dem einen oder den mehreren Reaktoren durch Überlauf entfernt wird, Flüssigkeiten und Feststoffe von dem Schlamm getrennt werden, und Feststoffe zu dem Reaktor überführt werden, welcher der nächste in der Strömungsrichtung der Feststoffe ist.

10. Verfahren nach einem der vorstehenden Ansprüche, wobei eine selektive Trennung von nicht umgesetzten Feststoffen aus dem Schlamm, der aus Feststoffen und Lösung gebildet ist, in Verbindung mit dem einen oder den mehreren Reaktoren angeordnet ist, und die getrennten, nicht umgesetzten Feststoffe oder ein Teil der Feststoffe zu dem Reaktor zurückgebracht werden, aus dem der Schlamm entfernt wurde, oder zu dem Reaktor überführt werden, welcher der nächste in der Strömungsrichtung der Feststoffe ist und in den eine frische, nicht umgesetzte Lösung eingespeist wird.

11. Verfahren nach einem der vorstehenden Ansprüche, wobei der Schlamm, der die Lösung und die Feststoffe enthält, aus dem einen oder den mehreren Reaktoren durch Überlauf entfernt wird.

12. Anordnung zum Verbessern der Verwendung eines Reaktorvolumens in einer Auslaugeinheit in einem hydrometallurgischen Prozess mit Sulfatumgebung, wobei die Anordnung eine Auslaugeinheit umfasst, die Folgendes umfasst

eine Reihe von einem oder mehreren Reaktoren,
eine Flotationseinheit als eine Einheit zum Trennen von Flüssigkeiten und Feststoffen, die angepasst ist, um die Flüssigkeiten und Feststoffe aus dem Schlamm zu trennen, wobei die Trenneinheit in Verbindung mit dem einen oder den mehreren Reaktoren angeordnet ist,
eine Einrichtung zum Zurückbringen der getrennten Feststoffe oder eines Teils der Feststoffe zu dem Reaktor, aus dem der Schlamm entfernt wurde, und/oder eine Einrichtung zum Überführen der getrennten Feststoffe oder eines Teils der Feststoffe zu dem Reaktor, welcher der nächste in der Strömungsrichtung der Feststoffe ist und in den eine frische, nicht umgesetzte Lösung eingespeist wird.

13. Anordnung nach Anspruch 12, wobei die Anordnung eine Flotationseinheit innerhalb eines Reaktors umfasst.

14. Anordnung nach Anspruch 12, wobei die Anordnung eine Flotationseinheit außerhalb eines Reaktors umfasst.

15. Anordnung nach einem der Ansprüche 12 bis 14, wobei die Einheit zum Trennen von Flüssigkeiten und Feststoffen in Verbindung mit jedem Reaktor in der Reaktorreihe angeordnet ist.

16. Anordnung nach einem der Ansprüche 12 bis 14, wobei die Einheit zum Trennen von Flüssigkeiten und Feststoffen in Verbindung mit den beiden letzten Reaktoren in der Reaktorreihe angeordnet ist.

17. Anordnung nach einem der Ansprüche 12 bis 14, wobei die Einheit zum Trennen von Flüssigkeiten und Feststoffen in Verbindung mit dem letzten Reaktor in der Reaktorreihe angeordnet ist.


## Revendications

1. Procédé permettant d'améliorer l'utilisation d'un volume de réacteur lors d'une étape de lixiviation d'un procédé hydrométallurgique, dans lequel une étape de lixiviation de matière solide contenant des métaux précieux s'effectue au moyen d'une solution de sulfate de lixiviation dans une série d'un ou plusieurs réacteurs, dans lequel la matière solide contenant des métaux précieux est du sulfure de zinc et/ou un résidu de calcination de zinc et une boue contenant de la solution et de la matière solide est extraite des uns ou plusieurs réacteurs par débordement et acheminée jusqu'à une unité de flottation pour la séparation des matières liquide et solide, la matière solide ou une partie de la matière solide séparée est renvoyée dans le réacteur d'où la boue a été extraite et/ou est transférée à un réacteur qui est le suivant dans le sens d'écoulement de la matière solide et vers lequel est alimentée une nouvelle solution n'ayant pas réagi.

2. Procédé selon la revendication 1, dans lequel la boue contenant de la solution et des solides est extraite des uns ou plusieurs réacteurs par débordement, les matières liquide et solide sont séparées de la boue et la matière solide est renvoyée dans le réacteur d'où la boue a été extraite.

3. Procédé selon la revendication 1 ou 2, dans lequel l'unité de flottation se trouve à l'intérieur du réacteur.

4. Procédé selon la revendication 1 ou 2, dans lequel l'unité de flottation se trouve à l'extérieur du réacteur.

5. Procédé selon l'une quelconque des revendications précédentes, dans lequel la séparation des matières liquide et solide est prévue en liaison avec chaque réacteur de la série de réacteurs.

6. Procédé selon l'une quelconque des revendications précédentes, dans lequel la séparation des matières solide et liquide est prévue en liaison avec les deux derniers réacteurs de la série de réacteurs.

**7.** Procédé selon l'une quelconque des revendications précédentes, dans lequel la séparation des matières solide et liquide est prévue en liaison avec le dernier réacteur de la série de réacteurs.

**8.** Procédé selon l'une quelconque des revendications précédentes, dans lequel l'étape de lixiviation a lieu selon un principe d'écoulement à courant parallèle.

**9.** Procédé selon l'une quelconque des revendications précédentes, dans lequel la boue contenant de la solution et de la matière solide est extraite des uns ou plusieurs réacteurs par débordement, les matières liquide et solide sont séparées de la boue et la matière solide est transférée à un réacteur qui est le suivant dans le sens d'écoulement de la matière solide.

**10.** Procédé selon l'une quelconque des revendications précédentes, dans lequel une séparation sélective de matière solide n'ayant pas réagi provenant de la boue formée de matière solide et de solution est prévue en association avec les uns ou plusieurs réacteurs et la matière solide n'ayant pas réagi ou la partie de la matière solide séparée est renvoyée dans le réacteur d'où la boue a été extraite et/ou est transférée à un réacteur qui est le suivant dans le sens d'écoulement de la matière solide et vers lequel est alimentée une nouvelle solution n'ayant pas réagi.

**11.** Procédé selon l'une quelconque des revendications précédentes, dans lequel la boue contenant de la solution et de la matière solide est extraite des uns ou plusieurs réacteurs par débordement.

**12.** Agencement permettant d'améliorer l'utilisation d'un volume de réacteur dans une unité de lixiviation dans un procédé hydrométallurgique à milieu sulfaté, dans lequel l'agencement comprend une unité de lixiviation qui comprend une série d'un ou plusieurs réacteurs,
une unité de flottation servant d'unité de séparation des matières liquide et solide adaptée pour séparer les matières liquide et solide à partir de la boue, ladite unité de séparation étant agencée en association avec les uns ou plusieurs réacteurs,
un équipement destiné à renvoyer la matière solide ou une partie de la matière solide séparée dans le réacteur d'où la boue a été extraite, et/ou un équipement destiné à transférer la matière solide ou une partie de la matière solide séparée à un réacteur qui est le suivant dans le sens d'écoulement de la matière solide et vers lequel est alimentée une nouvelle solution n'ayant pas réagi.

**13.** Agencement selon la revendication 12, dans lequel l'agencement comprend une unité de flottation à l'intérieur d'un réacteur.

**14.** Agencement selon la revendication 12, dans lequel l'agencement comprend une unité de flottation à l'extérieur d'un réacteur.

**15.** Agencement selon l'une quelconque des revendications 12 à 14, dans lequel l'unité de séparation des matières liquide et solide est agencée en liaison avec chaque réacteur de la série de réacteurs.

**16.** Agencement selon l'une quelconque des revendications 12 à 14, dans lequel l'unité de séparation des matières liquide et solide est agencée en liaison avec les deux derniers réacteurs de la série de réacteurs.

**17.** Agencement selon l'une quelconque des revendications 12 à 14, dans lequel l'unité de séparation des matières liquide et solide est agencée en liaison avec le dernier réacteur de la série de réacteurs.

EP 2 794 940 B1

Figure 1

Figure 2

Figure 3

12

R1  R2  R3  R4  R5

Thickener

Concentrate

Oxygen

Leaching solution

Figure 4

Figure 5

EP 2 794 940 B1

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6929677 B

- US 4157912 A